# EUROPÄISCHE PATENTSCHRIFT

(11) **EP 0 760 436 B1**
(45) Veröffentlichungstag und Bekanntmachung des Hinweises auf die Patenterteilung: **29.03.2000**
(21) Anmeldenummer: 96106748.5
(22) Anmeldetag: 29.04.1996
(51) Int. Cl.: F16D 65/092, F16D 69/04

(54) **Trägerplatte für Reibbeläge**
Backing plate for brake lining
Plaque de support pour garniture de frein

(30) Priorität: 31.08.1995 DE 19532019
(43) Veröffentlichungstag der Anmeldung: 05.03.1997
(73) Patentinhaber: Federal-Mogul Burscheid GmbH, 51399 Burscheid (DE)
(72) Erfinder: Fischer Hans, 51381 Leverkusen (DE); Neureuter, Lothar, 86316 Friedberg (DE)

(56) Entgegenhaltungen:
- EP-A- 0 581 988
- WO-A-89/09889
- WO-A-97/06370
- DE-A- 4 332 669
- GB-A- 1 160 503
- US-A- 4 569 424

## Beschreibung

Die Erfindung betrifft eine Trägerplatte für Reibbeläge aus Graugußwerkstoff, insbesondere für Bremsen von Kraftfahrzeugen, die auf der den Reibbelag tragenden Seite mit dem Reibbelag zusammenwirkende, kraft- und formschlußbildende Formkörper mit Hinterschneidungen aufweist.

Reibbeläge von Kraftfahrzeugbremsen, insbesondere für Scheibenbremsen, sind auf einer Trägerplatte aus metallischem Werkstoff angeordnet. Die Trägerplatte wird üblicherweise aus Stahl oder legiertem Stahl gefertigt. Der Reibbelag ist bevorzugt über eine Klebstoffschicht fest mit der Trägerplatte verbunden. Zur Verbesserung der Verbindung gegenüber Scherkräften können gemäß EP 0 163 030 in der Trägerplatte Öffnungen vorgesehen sein, in denen Fortsätze des Reibbelages angeordnet sind. Der Nachteil dieser Konstruktion liegt darin, daß durch die Öffnungen Feuchtigkeit eindringen kann, so daß eine Korrosion kriechend von diesen Öffnugnen ausgehen kann, die zu einer Unterrostung der Reibbeläge führt. Eine einwandfreie Funktion der Bremse ist dann nicht mehr gewährleistet.

Um dieses Problem zu beheben wurden auch schon Trägerplatten entwickelt, auf denen auf der den Reibbelag tragenden Seite ein Halterungsbett aufgesintert wurde. Die DE 41 38 933 A1 offenbart eine derartige gattungsgemäße Trägerplatte. Das Halterungsbett besteht aus auf die Trägerplatte aufgesinterten kugelförmigen Formkörpern, die im Befestigungsbereich Hinterschneidungen bilden. Zur Vermeidung von Korrosion ist über den Formkörpern ein geschlossener metallischer Überzug vorgesehen, der aus Kupfer, Silber, Zinn, Cadmium oder einem anderen Material bestehen kann. Die Herstellung einer solchen Trägerplatte verlangt eine Vielzahl von Arbeitsschritten, um die Vielzahl der unterschiedlichen Materialien miteinander zu verbinden.

Aus der GB 1160503 ist eine gattungsgemäße Trägerplatte, bei der die Formkörper als Ausnehmungen oder Vertiefungen ausgebildet sind, zu entnehmen.

Der Erfindung liegt die Aufgabe zugrunde, eine gattungsgemäße Trägerplatte im Hinblick auf eine wirtschaftliche Fertigung und deren funktionstechnischen Eigenschaften zu verbessern.

Diese Aufgabe wird erfindungsgemäß durch die kennzeichnenden Merkmale des Patentanspruchs 1 gelöst. Die Belastung der Trägerplatte ist eine Kombination von mechanischer und thermischer Beanspruchung, wobei jede Beanspruchungsart für sich betrachtet zu gegensätzlichen Konstruktionsprinzipien führt. Während die mechanische Belastung große Materialdicken verlangt, erfordert die thermische Belastung gerade das Gegenteil, um die Temperaturgradienten niedrig und damit die Wärmespannungen in zulässigen Grenzen zu halten. Bisher galt Stahl als klassischer Werkstoff für Trägerplatten. Es hat sich gezeigt, daß die erfindungsgemäßen Gußeisen wegen ihrer guten mechanischen Eigenschaften günstig für die Herstellung von Trägerplatten sind. Vorzugsweise ist die die Formkörper tragende Oberfläche axial zurückgesetzt, so daß der Reibbelag optimal gegen Scherkräfte gesichert ist. Die Erfindung ist in der Zeichnung anhand eines Ausführungsbeispieles dargestellt und wird im folgenden näher erläutert:

Es zeigen:
- Figur 1: Trägerplatte in einer Ansicht auf die den Reibbelag tragenden Seite
- Figur 2: Alternative Ausgestaltung gemäß Figur 1
- Figur 3: Modellträgerplatte in ungepreßtem Zustand
- Figur 4: Modellträgerplatte im gepreßten Zustand

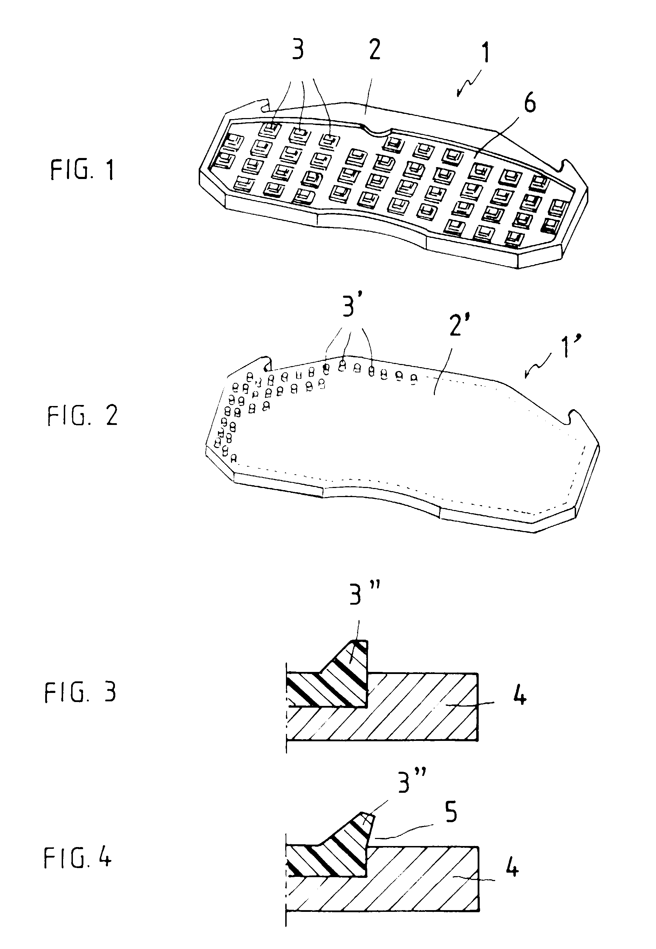

Die in der Figur 1 dargestellte Trägerplatte (1) besteht aus einem Graugußwerkstoff der Qualität GGG oder GGL. Die Trägerplatte (1) ist im Sandgußverfahren hergestellt und weist auf der Oberfläche (2) noppenförmige Formkörper (3) auf. Der nicht dargestellte Reibbelag wird auf die Formkörper aufgepreßt und verklammmert sich mit ihnen. Die Formkörper weisen eine Hinterschneidung auf, wodurch die Haftung zwischen Reibbelag und Trägerplatte (1) erhöht wird. Im einfachsten Fall ist die Oberflächenstruktur aus zylinder- (3') im gesamten gestrichelten Bereich (Figur 2) oder würfelförmigen Formkörpern (3) (Figur 1) gebildet. Zur Erzeugung der Hinterschneidung wird das in der Figur 3 und 4 dargestellte Modell (4) der Trägerplatte (1) als Gießformmodell verwendet.

Zur Bildung der Formkörper (3, 3') weist das Modell (4) elastomere Formkörper (3") auf Beim Abformen wird der Formstoff (loser Sand) auf das Modell (4) aufgebracht und durch hydraulische Pressen (nicht dargestellt) verdichtet. Der Formsand verformt die elastomeren Formkörper (3") bei der Verdichtung, wie in der Figur 4 dargestellten Weise. Die Schrägstellung der elastomeren Formkörper (3") erzeugt eine Hinterschneidung (5). Beim Entformen ziehen sich die elastomeren Formkörper (3") aus der Form und hinterlassen im Sand einen Hohlraum. Dieser Hohlraum wird mit dem beschriebenen flüssigen Metall gefüllt und ergibt so die Trägerplatte (1) mit Hinterschneidungen (5) an den Formkörpern (3, 3') (Figur 1 und 2).

## Patentansprüche

1. Trägerplatte für Reibbeläge aus Graugußwerkstoff, insbesondere für Bremsen von Kraftfahrzeugen, die auf der den Reibbelag tragenden Seite mit dem Reibbelag zusammenwirkende, kraft- und formschlußbildende, einstückig angegossenen Formkörper mit Hinterschneidungen aufweist, dadurch gekennzeichnet, daß die Trägerplatte (1, 1') aus den Werkstoffsorten GGG oder GGL gebildet ist und Formkörper (3) als runde oder eckige, noppenförmige Erhebungen ausgebildet sind.

2. Trägerplatte nach Anspruch 1, dadurch gekennzeichnet, daß die Formkörper (3, 3') tragende Oberfläche (6) axial zurückgesetzt ist.

## Claims

1. A backing plate for friction linings of grey cast iron, especially for brakes of motor vehicles, which has integrally cast moulded bodies with undercuts on the side carrying the friction lining cooperating the with the friction lining with formation of frictional and interlocking engagement, characterized in that the backing plate (1, 1') is made from the GGG or GGL kinds of materials and moulded bodies (3) are formed as round or cornered raised elements like knobs.

2. A backing plate according to claim 1, characterized in that the surface (6) carrying the moulded bodies (3, 3') is set back axially.

## Revendications

1. Plaque de support pour garniture de freins en matériau de fonte grise, en particulier pour freins de véhicules automobiles, qui comprend sur le côté supportant la garniture de freins un corps de forme avec des contre-dépouilles, moulé d'une seule pièce et coopérant avec la garniture de freins et formé de manière adaptée en force et en forme, caractérisée en ce que le support de plaque (1, 1') est formé à partir des types de matériau GGG ou GGL et les corps de forme (3) sont réalisés sous la forme de saillies rondes ou anguleuses en forme d'ergots.

2. Support de plaque selon la revendication 1, caractérisé en ce que la surface supérieure (6) supportant les corps de forme (3, 3') est décalée axialement.
